# EUROPEAN PATENT SPECIFICATION

(11) **EP 3 434 556 B1**
(45) Date of publication and mention of the grant of the patent: **23.10.2019**
(21) Application number: 18185758.2
(22) Date of filing: 26.07.2018
(51) Int. Cl.: B62B 7/00, A47D 13/02

(54) **DOUBLE SAFETY LOCK MECHANISM AND BABY CARRIER THEREWITH**
DOPPELTER SICHERHEITSSCHLOSSMECHANISMUS UND BABYTRÄGER DAMIT
MÉCANISME DE VERROUILLAGE DE SÉCURITÉ DOUBLE ET PORTE-BÉBÉ EN ÉTANT DOTÉ

(30) Priority: 28.07.2017 CN 201710632592
(43) Date of publication of application: 30.01.2019
(73) Proprietor: Wonderland Switzerland AG, 6312 Steinhausen (CH)
(72) Inventor: GUO, Zheng-Wen, Guangdong 523648 (CN); WU, Bo, Guangdong 523648 (CN)
(74) Representative: Hoefer & Partner Patentanwälte mbB

(56) References cited:
- WO-A1-2016/012849
- US-A- 5 660 435
- US-A1- 2008 048 482

## Description

### Field of the Invention

The present invention relates to a double safety lock mechanism according to the preamble of claim 1.

### Background of the Invention

Baby carriers are generally adopted by families with babies, and diversity of the baby carriers provides the families with great convenience in carrying babies, For instance WO2016012849 A1 describes a baby carrier of this kind. Nowadays, people are paying more and more attention on functionality and safety of the baby carriers. Taking a baby stroller for example, it provides convenience in taking babies to outdoor activities, and the baby stroller is further designed to be foldable for including extra advantages of easy transportation and storage.

In addition to a frame locking device to lock a frame of a foldable baby carrier in use, an unlocking device is further installed for unlocking the frame locking device so that the foldable baby carrier can be folded. However, a conventional unlocking device of the foldable baby carrier does not have a function of double safety lock. That is, conventional foldable baby carriers in use are prone to be folded due to unintentional operation, especially by a baby seated in the foldable baby carrier, which puts the baby at high risk.

Therefore, to solve the abovementioned conventional problem, it is important to develop a baby carrier and a double safety lock mechanism which prevent accidental operation.

### Summary of the Invention

This in mind, the present invention aims at providing a double safety lock mechanism used in a baby carrier for preventing the baby carrier from being folded unintentionally.

The present invention further aims at providing a baby carrier with a double safety lock mechanism for preventing accidental operation.

These are achieved by a double safety lock mechanism according to claim 1. The dependent claims pertain to corresponding further developments and improvements.

As will be seen more clearly from the detailed description following below, the claimed double safety lock mechanism is used in a baby carrier. The double safety lock mechanism includes a folding device, an upper cover, and a first restoring member. The folding device is connected to a folding joint of the baby carrier and for driving the folding joint to fold the baby carrier. The upper cover is disposed on a seat of the baby carrier and for covering the folding device. The upper cover is closed relative to the seat for covering the folding device at a first configuration. The upper cover is opened relative to the seat for exposing the folding device at a second configuration. An end of the first restoring member is connected with the seat and/or a carrier frame of the baby carrier, and another end of the first restoring member is connected with the upper cover so as to bias the upper cover to move from the second configuration to the first configuration.

Preferably, an opening is formed between the upper cover and the seat. The opening is opened when the upper cover is at the second configuration, and the opening is closed when the upper cover moves from the second configuration to the first configuration.

Preferably, the double safety lock mechanism further includes a fixing structure disposed between the upper cover and the seat and for detachably fixing the upper cover at the first configuration.

Preferably, the fixing structure is a hook and loop fastener, a zipper, a fastener, a button, a magnet, or a batten.

Preferably, the folding device includes a folding actuator and a second restoring member. The folding actuator is disposed astride the seat and connected with the folding joint for pulling the folding joint. An end of the second restoring member is connected with the carrier frame, the seat and/or the folding actuator, another end of the second restoring member is connected with the folding actuator for restoring the folding actuator.

Preferably, the second restoring member is stretched when the folding actuator is forced to pull the folding joint, and the second restoring member retracts to restore the folding actuator when the folding actuator is released.

Preferably, each of the first restoring member and the second restoring member is an elastic ribbon, a spring, a rubber band, or an elastic iron wire.

Preferably, the double safety lock mechanism further includes a lower cover connected with the seat and for covering the folding device and disposed between the seat and the upper cover.

Preferably, the lower cover is capable of being inverted relative to the seat so as to expose the folding device.

Preferably, the lower cover is made of elastic material.

Preferably, the double safety lock mechanism further includes a third restoring member connected with the lower cover and the seat.

Preferably, the third restoring member is an elastic ribbon, a spring, a rubber band, or an elastic iron wire.

Preferably, the upper cover is made of rigid material or flexible material.

Correspondingly, the present invention further discloses a baby carrier which includes a carrier frame, a seat mounted on the carrier frame, and the abovementioned double safety lock mechanism.

In contrast to conventional double safety lock mechanism, the double safety lock mechanism of the present invention includes the upper cover and the first restoring member. The upper cover disposed on the seat of the baby carrier is for covering the folding mechanism and has a first configuration and a second configuration. At the first configuration, the upper cover is closed relative to the seat. At the second configuration, the upper cover is opened relative to the seat. Besides, an end of the first restoring member is connected with the seat and/or the carrier frame of the baby carrier, and another end of the first restoring member is connected with the upper cover so as to bias the upper cover to move from the second configuration to the first configuration. Therefore, when the baby carrier is in use, the upper cover is at the first configuration for covering the folding device between the upper cover and the seat, and the first restoring member keeps the upper cover at the first configuration. When the baby carrier is to be folded, the upper cover needs to be opened and moved to the second configuration before pulling the folding device for driving the folding joint to fold the baby carrier. That is, the baby carrier cannot be folded without opening the upper cover and pulling the folding device in two steps, which effectively prevents the baby carrier from being folded unintentionally and thereby improves the reliability of folding procedure and the safety of use. Correspondingly, a baby carrier with the double safety lock mechanism of the present invention also has the abovementioned inventive features.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a diagram of a baby carrier with a double safety lock mechanism according to an embodiment of the present application,
FIG. 2 is a diagram of the double safety lock mechanism as shown in FIG. 1 at a first configuration according to the embodiment of the present application,
FIG. 3 is a diagram of the double safety lock mechanism at a second configuration according to the embodiment of the present application,
FIG. 4 is a diagram of the double safety lock mechanism at the second configuration from another viewpoint according to the embodiment of the present application,
FIG. 5 is a diagram of the double safety lock mechanism at the second configuration with an actuated folding device according to the embodiment of the present application,
FIG. 6 is an enlarged view of the baby carrier as shown in FIG. 1 from another viewpoint according to the embodiment of the present application,
FIG. 7 is a diagram of the folding device according to the embodiment of the present application,
FIG. 8 is a diagram of the folding device according to another embodiment of the present application,
FIG. 9 is a diagram of a double safety lock mechanism at the first configuration according to another embodiment of the present application,
FIG. 10 is a diagram of the double safety lock mechanism as shown in FIG. 9 at the second configuration according to the another embodiment of the present application,
FIG. 11 is a diagram of the double safety lock mechanism as shown in FIG. 9 at the second configuration from another viewpoint according to the another embodiment in FIG. 9 of the present application, and
FIG. 12 is a diagram of the double safety lock mechanism as shown in FIG. 9 at the second configuration with the actuated folding device according to the another embodiment of the present application.

### Detailed Description

In the following detailed description of the preferred embodiments, reference is made to the accompanying drawings which form a part hereof, and in which is shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive.

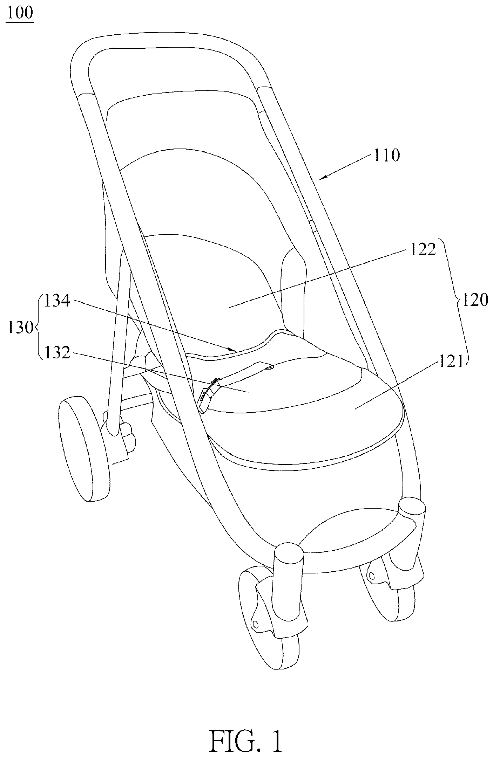

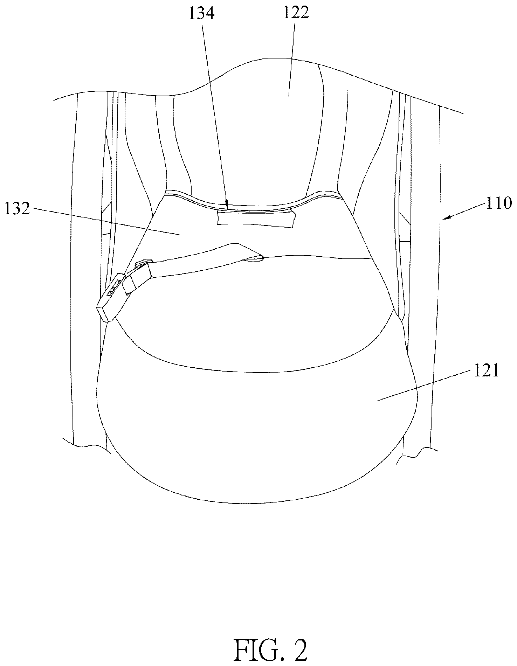

Please refer to FIG. 1 and FIG. 2. FIG. 1 is a diagram of a baby carrier 100 with a double safety lock mechanism 130 according to an embodiment of the present application. FIG. 2 is a diagram of the double safety lock mechanism 130 as shown in FIG. 1 at a first configuration according to the embodiment of the present application. The baby carrier 100 can be a stroller. The baby carrier 100 disclosed by the present application includes a carrier frame 110, a seat 120 mounted on the carrier frame 110, and the double safety lock mechanism 130 disposed on the seat 120. The carrier frame 110 includes a folding joint, and a frame locking device is disposed in the folding joint for locking the unfolded carrier frame 110. The seat 120 includes a seat portion 121 and a backrest portion 122 connected with the seat portion 121. The double safety lock mechanism 130 is disposed on the seat 120 and connected with the folding joint. By operating the double safety lock mechanism 130, the folding joint can be driven to unlock the frame locking device so as to fold the carrier frame 110. Since the double safety lock mechanism 130 requires at least two steps to operate, accidental operation can be prevented, and thereby the baby carrier 100 can be folded reliably and used safely.

Further detailed description about the double safety lock mechanism 130 is introduced in the following paragraphs with various exemplary embodiments and figures thereof.

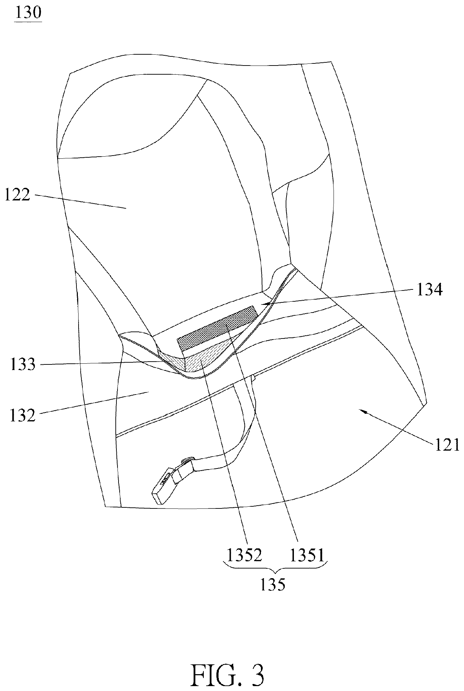

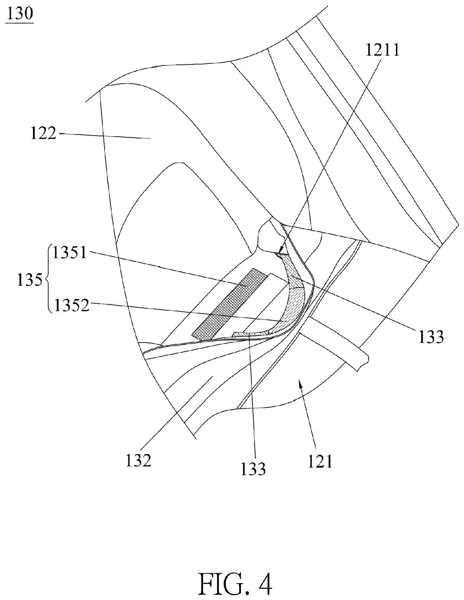

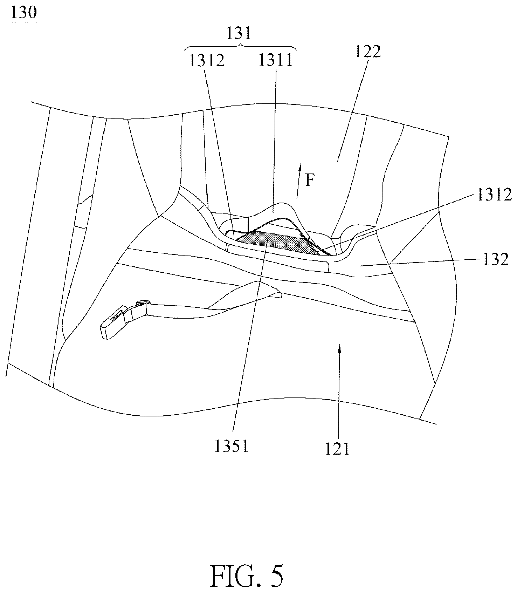

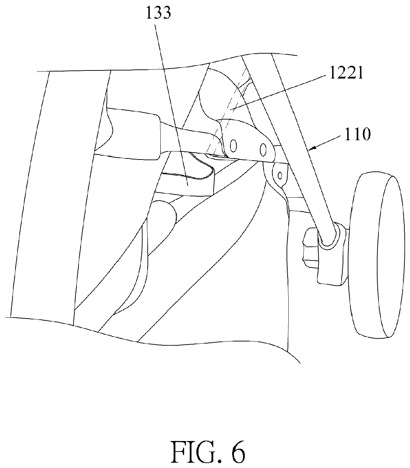

Please refer to FIG. 2 to FIG. 6. FIG. 3 is a diagram of the double safety lock mechanism 130 as shown in FIG. 2 at a second configuration according to the embodiment of the present application. FIG. 4 is a diagram of the double safety lock mechanism 130 at the second configuration from another viewpoint according to the embodiment of the present application. FIG. 5 is a diagram of the double safety lock mechanism 130 at the second configuration with an actuated folding device 131 according to the embodiment of the present application. FIG. 6 is an enlarged view of the baby carrier 100 as shown in FIG. 1 from another viewpoint according to the embodiment of the present application. The double safety lock mechanism 130 includes the folding device 131, an upper cover 132, and at least one first restoring member 133. The folding device 131 is connected with the folding joint of the baby carrier 100 and can drive the folding joint to unlock the frame locking device so that the carrier frame 110 can be folded. The upper cover 132 is disposed on the seat portion 121 of the baby carrier 100 and for covering the folding device 131. The upper cover 132 has a first configuration and a second configuration. As shown in FIG. 2, the upper cover 132 is closed relative to the seat portion 121 for covering the folding device at the first configuration. As shown in FIG. 5, the upper cover 132 is opened relative to the seat portion 121 for exposing and operating the folding device 131 at the second configuration. An end of the first restoring member 133 is connected with the seat 120 and/or the carrier frame 110, as shown in FIG. 6, and another end of the first restoring member 133 is connected with the upper cover 132, as shown in FIG. 4, so as to bias the upper cover 132 to move from the second configuration to the first configuration.

Please refer to FIG. 2 to FIG. 6. The upper cover 132 is connected with a seat cloth of the seat 120 and disposed above the seat portion 121. A pocket with an opening 134 is formed between the upper cover 132 and the seat portion 121, and the folding device 131 can be received inside the pocket. In practical application, the opening 134 is closed when the upper cover 132 is at the first configuration. When the upper cover 132 moves from the first configuration to the second configuration, the opening 134 is opened, as shown in FIG. 3 to FIG.5, for exposing and operating the folding device 131. The carrier frame 110 can be folded by pulling the upper cover 132 to open the opening 134 of the pocket and then pulling the folding device 131 therein to unlock the folding joint, which effectively prevents accidental operation.

Please refer to FIG. 3 to FIG. 5. The double safety lock mechanism 130 further includes a fixing structure 135 disposed between the upper cover 132 and the seat portion 121 and for detachably fixing the upper cover 132 at the first configuration. The fixing structure 135 can be, but is not limited to, a hook and loop fastener, i.e. a velcro strap or a touch fastener, a zipper, a fastener, a button, a magnet, or a batten.

According to a preferred embodiment of the present application, the fixing structure 135 can be a hook and loop fastener pair including a first fastener 1351 and a second fastener 1352 corresponding to the first fastener 1351. One of the first fastener 1351 and the second fastener 1352 is fixed on the seat cloth, and the other of the first fastener 1351 and the second fastener 1352 is fixed on an inside of the upper cover 132. The opening 134 can be closed by adhering the first fastener 1351 to the second fastener 1352, which prevents the folding device 131 from being exposed and unintentionally operated and adds an extra step into folding procedure for the baby carrier 100. Therefore, it can effectively prevent the accidental operation and improve reliability of the folding procedure. In this embodiment, the first fastener 1351 is fixed on the seat cloth and the second fastener 1352 is fixed on the inside of the upper cover 132, as shown in FIG. 3, but not limited to this.

Please refer to FIG. 2, FIG. 4, and FIG. 6. The double safety lock mechanism 130 includes two first restoring members 133. The first restoring members 133 can be an elastic ribbon according to a preferred embodiment of the present application. The elastic ribbons can be fixed on the inside of the upper cover 132, specifically on two opposite ends of the second fastener 1352. Seat cloth holes 1211 respectively corresponding to the elastic ribbons are formed on the seat portion 121. The end of the elastic ribbon connected with the carrier frame 110 passes through the seat cloth hole 1211 and is connected with a backrest tube 1221, but not limited to this. In other embodiments, the end of the elastic ribbon can be connected to the seat cloth or to other positions of the carrier frame 110. When the upper cover 132 is pulled to move to the second configuration and to open the opening 134, the elastic ribbons are stretched to generate restoring force. Therefore, when the upper cover 132 is released, the elastic ribbons retract to restore the upper cover 132 to the first configuration, which adheres the upper cover 132 to the seat portion 121 so that the opening 134 is closed, as shown in FIG. 2.

Understandably, the first restoring member 133 can be, but is not limited to, the elastic ribbon, a spring, a rubber band, an elastic iron wire, or any other elastic component that serves to restore the upper cover 132.

According to a preferred embodiment, the upper cover 132 is made of flexible material and can be a piece of fabric integrated with the seat cloth, but not limited to this. In another embodiment, the upper cover 132 can be made of rigid material such as plastic or metal, which facilitates the opening 134 of the pocket to maintain in an opened status. Therefore, the upper cover 132 can be made of rigid material or flexible material. Besides, the upper cover 132 can be designed as an isolated component connected with the seat cloth or as a part of a seat plate that supports the seat 121.

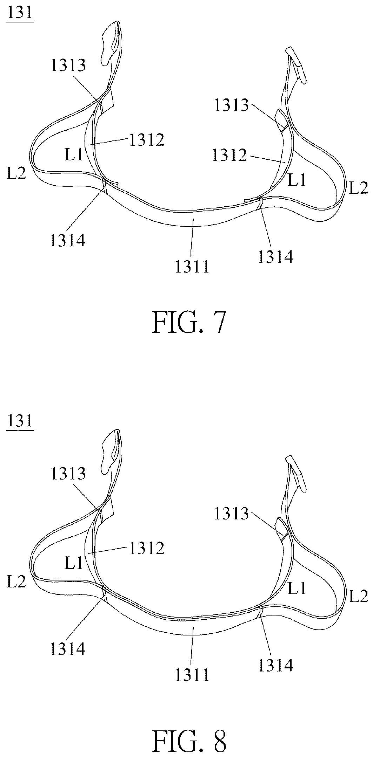

Please refer to FIG. 5 and FIG. 7. FIG. 7 is a diagram of the folding device 131 according to the embodiment of the present application. The folding device 131 includes a folding actuator 1311 and a second restoring member 1312. The folding actuator 1311 is disposed astride the seat portion 121 and connected with the folding joint for pulling the folding joint to fold the carrier frame 110. An end of the second restoring member 1312 is connected with the carrier frame 110, the seat 120 and/or the folding actuator 1311, and another end of the second restoring member 1312 is connected with the folding actuator 1311 for restoring the folding actuator 1311. The second restoring member 1312 is stretched when the folding actuator 1311 is pulled, and the second restoring member 1312 retracts to restore the folding actuator 1311 when the folding actuator 1311 is released.

According to a preferred embodiment, as shown in FIG. 7, the second restoring member 1312 can be an elastic ribbon, and two ends of the elastic ribbon are fixed on the folding actuator 1311. In practical application, elastic ribbons are respectively fixed to two opposite ends of the folding actuator 1311 in the same fixing configuration so as to ensure that the folding actuator 1311 can be balanced. For example, the two ends of each of the elastic ribbons can be respectively fixed to a first fixing point 1313 and a second fixing point 1314 on the folding actuator 1311. A length L1 of the elastic ribbon between the first fixing point 1313 and the second fixing point 1314 is smaller than a length L2 of the folding actuator 1311 between the first fixing point 1313 and the second fixing point 1314 at an unforced configuration. Therefore, the elastic ribbon can be stretched to generate a restoring force when the folding actuator 1311 is pulled, and the elastic ribbon can retract to restore the folding actuator 1311 when the folding actuator 1311 is released.

Please refer to FIG. 8. FIG. 8 is a diagram of the folding device 131 according to another embodiment of the present application. As shown in FIG. 8, the elastic ribbons can be integrated into a single elastic ribbon and fixed to the two opposite ends of the folding actuator 1311 at four designated fixing points, which corresponds to the fixing configuration illustrated in FIG. 7 and therefore is not illustrated here for simplicity.

It is noticed that the second restoring member 1312 can be, but is not limited to, an elastic ribbon, a spring, a rubber band, an elastic iron wire, or any other elastic component. Besides, the configuration of fixing the second restoring members 1312 on the folding actuator 1311 is not limited to the abovementioned embodiments. In other embodiments, the second restoring members 1312 can be fixed to other points on the folding actuator 1311 so as to restore the folding actuator 1311.

Further detailed description about operational procedure and principle of the double safety lock mechanism 130 is introduced in the following paragraphs with various embodiments and figures thereof.

Please refer to FIG. 1 to Fig. 2. When the baby carrier 100 is in use, the carrier frame 110 is unfolded and locked by the frame locking device in the folding joint, and the folding device connected with the folding joint is covered and accommodated in the pocket formed between the upper cover 132 and the seat portion 121. The upper cover 132 adheres to the seat portion 121 through attachment between the first fastener 1351 and the second fastener 1352 so as to close the opening 134 of the pocket, which prevents the folding device from being exposed and unintentionally operated. Even a child seated on the seat 120 and playing around is improbable to open the upper cover 132 and further unintentionally operate the folding device. Therefore, safety of the locked carrier frame 110 of the baby carrier 100 can be ensured.

Please refer to FIG. 3 to Fig. 5. In the procedure of folding the baby carrier 100, the first step is to pull the upper cover 132 for separating the first fastener 1351 and the second fastener 1352 and moving the upper cover 132 from the first configuration to the second configuration so that the opening 134 of the pocket is opened. The second step is to pull the folding actuator 1311 along an upward direction F shown in Fig. 5 so as to unlock the frame locking device and drive the folding joint to fold the carrier frame 110. Since the procedure requires two steps to accomplish, accidental folding of the baby carrier 100 can be effectively prevented. Therefore, reliability of folding procedure and safety of use can be improved.

As shown in FIG. 4 and FIG. 5, the first restoring member 133 and the second restoring member 1312 are stretched to generate restoring forces during the above mentioned procedure. Therefore, the second restoring member 1312 retracts to restore the folding actuator 1311 when the folding actuator 1311 is released. Besides, when the upper cover 132 is released, the first restoring member 133 retracts to move the upper cover 132 from the second configuration to the first configuration, keep the upper cover 132 at the first configuration, and press the upper cover 132 for attaching the first fastener 1351 to the second fastener 1352 so as to close the opening 134 and cover the folding actuator 1311 in the pocket, as shown in FIG. 2.

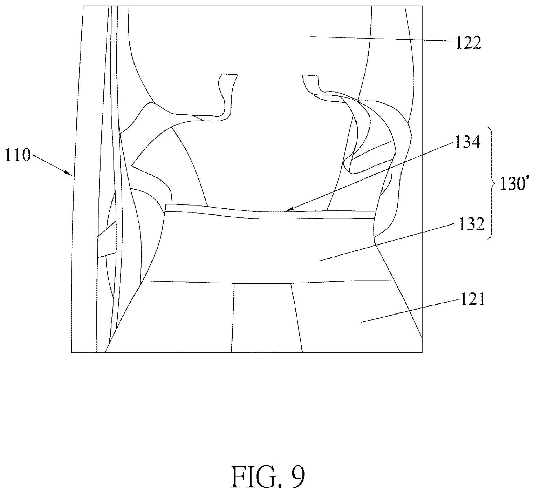

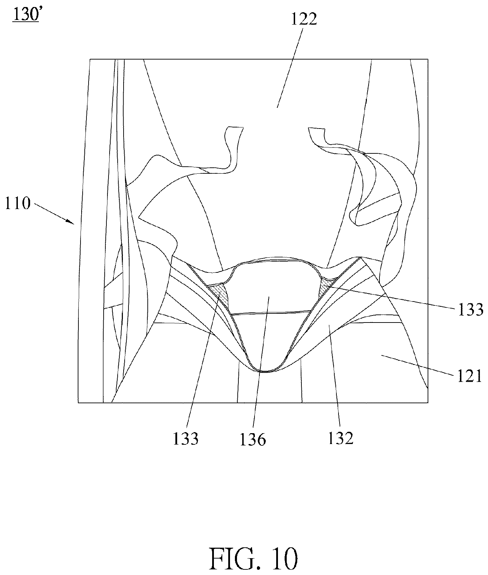

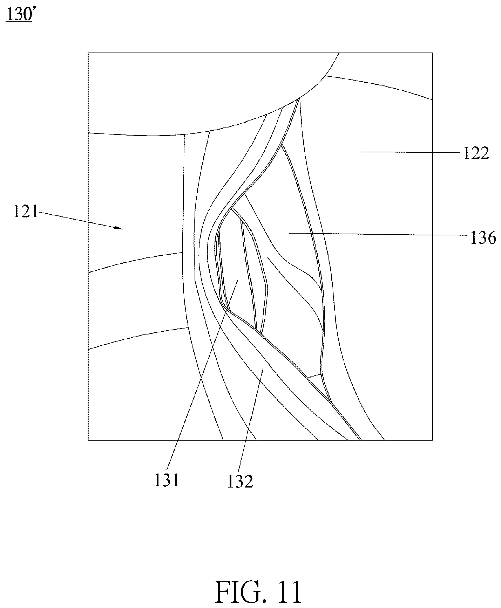

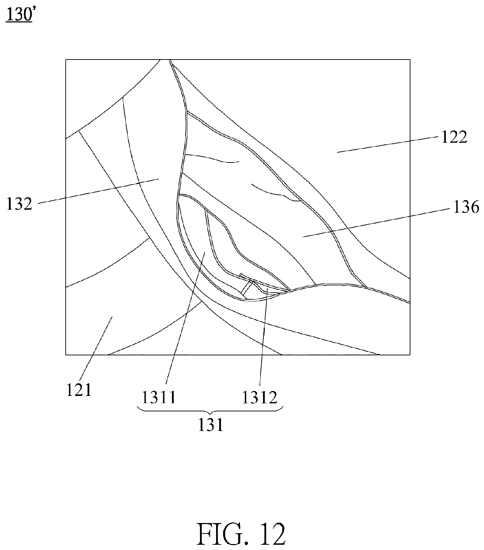

Please refer to FIG. 9 to Fig. 12. FIG. 9 is a diagram of a double safety lock mechanism 130' of the baby carrier 100 at the first configuration according to another embodiment of the present application. FIG. 10 is a diagram of the double safety lock mechanism 130' at the second configuration according to the another embodiment of the present application. FIG. 11 is a diagram of the double safety lock mechanism 130' at the second configuration from another viewpoint according to the another embodiment of the present application. FIG. 12 is a diagram of the double safety lock mechanism 130' at the second configuration with the actuated folding device 131 according to the another embodiment of the present application. The difference between this embodiment and the previous embodiment is that the double safety lock mechanism 130' further includes a lower cover 136 connected with the seat portion 121 and for covering the folding device 131, and further detailed description of the difference is introduced as follows.

As shown in FIG. 10 to FIG. 12, two ends of the lower cover 136 are connected with the seat portion 121, and the lower cover 136 can be inverted relative to the seat 120 so as to expose a space formed between the lower cover 136 and the seat portion 121 and for accommodating the folding device 131. The upper cover 132 is disposed above the lower cover 136 and can cover the lower cover 136, that is, the folding actuator 1311 is covered by the lower cover 136 and the upper cover 132 in sequence.

According to a preferred embodiment, the lower cover 136 can be made of elastic material, such as elastic fabric, which serves as a feature for retracting the lower cover 136 via intrinsic restoring force to cover the folding actuator 1311.

Understandably, the double safety lock mechanism 130 can further include a third restoring member connected with the lower cover 136 and the seat portion 121. The third restoring member can be, but is not limited to, an elastic ribbon, a spring, a rubber band, an elastic iron wire, or any other elastic component that serves to retract the lower cover 136. Besides, since the double safety lock mechanism 130' has the lower cover 136, the fixing structure 135 between the upper cover 132 and the seat portion 121 can be omitted.

Please refer to FIG. 9 to FIG. 12. When the baby carrier 100 is in use, the folding actuator 1311 is covered by the lower cover 136 and the upper cover 132 in sequence, which can be prevented from being accidentally operated. In the procedure of folding the baby carrier 100, the first step is to pull and move the upper cover 132 to the second configuration so that the opening 134 of the pocket can be opened, as shown in FIG. 10. The second step is to invert the lower cover 136 upward to expose the folding actuator 1311, as shown in FIG. 11. Next, the third step is to pull the folding actuator 1311, as shown in FIG. 12, for driving the folding joint to fold the carrier frame 110. Therefore, the procedure requires three steps to accomplish, which more effectively prevents the accidental folding of the baby carrier 100 and improves reliability of folding procedure and safety of use.

When the folding actuator 1311 is released, the second restoring member 1312 retracts to restore the folding actuator 1311, and the lower cover 136 is also restored by the intrinsic restoring force so as to cover the folding actuator 1311. When the upper cover 132 is released, the first restoring member 133 retracts to pull the upper cover 132 from the second configuration to the first configuration and keep the upper cover 132 at the first configuration for covering the lower cover 136. Therefore, the folding actuator 1311 is covered and accommodated in the pocket.

It should be noticed that the structures, configurations and operational principles of the carrier frame 110, the folding joint and the frame locking device of the baby carrier 100 of the present application is according to conventional design principles of corresponding fields, which is not illustrated here for simplicity.

In summary, the double safety lock mechanism of the present invention includes the upper cover and the first restoring member. The upper cover disposed on the seat of the baby carrier is for covering the folding mechanism and has a first configuration and a second configuration. At the first configuration, the upper cover is closed relative to the seat. At the second configuration, the upper cover is opened relative to the seat. Besides, an end of the first restoring member is connected with the seat and/or the carrier frame of the baby carrier, and another end of the first restoring member is connected with the upper cover so as to bias the upper cover to move from the second configuration to the first configuration. Therefore, when the baby carrier is in use, the upper cover is at the first configuration for covering the folding device between the upper cover and the seat, and the first restoring member keeps the upper cover at the first configuration. When the baby carrier is to be folded, the upper cover needs to be opened and moved to the second configuration before pulling the folding device for driving the folding joint to fold the baby carrier. That is, the baby carrier cannot be folded without opening the upper cover and pulling the folding device in two steps, which effectively prevents the baby carrier from being folded unintentionally and thereby improves the reliability of folding procedure and the safety of use.

Those skilled in the art will readily observe that numerous modifications and alterations of the device may be made while retaining the teachings of the invention as defined in the appended claims.

## Claims

1. A double safety lock mechanism (130) used in a baby carrier (100), the double safety lock mechanism (130) comprising:
a folding device (131) connected to a folding joint of the baby carrier (100) and for driving the folding joint to fold the baby carrier (100);
an upper cover (132) disposed on a seat (120) of the baby carrier (100) and for covering the folding device (131), the upper cover (132) being closed relative to the seat (120) for covering the folding device (131) at a first configuration, and the upper cover (132) being opened relative to the seat (120) for exposing the folding device (131) at a second configuration; and
a first restoring member (133), an end of the first restoring member (133) being connected with at least one of the seat (120) and a carrier frame (110) of the baby carrier (100), and another end of the first restoring member (133) being connected with the upper cover (132) so as to bias the upper cover (132) to move from the second configuration to the first configuration.

2. The double safety lock mechanism (130) of claim 1, **characterized in that** an opening (134) is formed between the upper cover (132) and the seat (120), the opening (134) is opened when the upper cover (132) is at the second configuration, and the opening (134) is closed when the upper cover (132) moves from the second configuration to the first configuration.

3. The double safety lock mechanism (130) of any one of claims 1 to 2, further **characterized by** a fixing structure (135) disposed between the upper cover (132) and the seat (120) and for detachably fixing the upper cover (132) at the first configuration.

4. The double safety lock mechanism (130) of claim 3, **characterized in that** the fixing structure (135) is at least one of a hook and loop fastener, a zipper, a fastener, a button, a magnet, and a batten.

5. The double safety lock mechanism (130) of any one of claims 1 to 4, **characterized in that** the folding device (131) comprises:
a folding actuator (1311) disposed astride the seat (120) and connected with the folding joint for pulling the folding joint; and
a second restoring member (1312), an end of the second restoring member (1312) being connected with at least one of the carrier frame (110), the seat (120) and the folding actuator (1311), another end of the second restoring member (1312) being connected with the folding actuator (1311) for restoring the folding actuator (1311).

6. The double safety lock mechanism (130) of claim 5, **characterized in that** the second restoring member (1312) is stretched when the folding actuator (1311) is forced to pull the folding joint, and the second restoring member (1312) retracts to restore the folding actuator (1311) when the folding actuator (1311) is released.

7. The double safety lock mechanism (130) of any one of claims 5 to 6, **characterized in that** each of the first restoring member (133) and the second restoring member (1312) is at least one of an elastic ribbon, a spring, a rubber band, and an elastic iron wire.

8. The double safety lock mechanism (130) of any one of claims 1 to 7, further **characterized by** a lower cover (136) connected with the seat (120) and for covering the folding device (131) and disposed between the seat (120) and the upper cover (132).

9. The double safety lock mechanism (130) of claim 8, **characterized in that** the lower cover (136) is capable of being inverted relative to the seat (120) so as to expose the folding device (131).

10. The double safety lock mechanism (130) of any one of claims 8 to 9, **characterized in that** the lower cover (136) is made of elastic material.

11. The double safety lock mechanism (130) of any one of claims 8 to 10, further **characterized by** a third restoring member connected with the lower cover (136) and the seat (120).

12. The double safety lock mechanism (130) of claim 11, **characterized in that** the third restoring member is at least one of an elastic ribbon, a spring, a rubber band, and an elastic iron wire.

13. The double safety lock mechanism (130) of any one of claims 1 to 12, **characterized in that** the upper cover (132) is made of rigid material or flexible material.

14. A baby carrier (100), comprising:
a carrier frame (110);
a seat (120) mounted on the carrier frame (110); and
the double safety lock mechanism (130) of any one of claims 1 to 12.

## Patentansprüche

1. Doppelter Sicherheitsverriegelungsmechanismus (130), der in einer Babyaufnahmevorrichtung (100) verwendet wird, wobei der doppelte Sicherheitsverriegelungsmechanismus (130) umfasst:
eine Klappvorrichtung (131), die mit einem Klappgelenk der Babyaufnahmevorrichtung (100) verbunden ist und das Klappgelenk zum Zusammenklappen der Babyaufnahmevorrichtung (100) antreibt;
eine obere Abdeckung (132), die an einem Sitz (120) der Babyaufnahmevorrichtung (100) angeordnet ist und die Klappvorrichtung (131) abdeckt, wobei die obere Abdeckung (132) relativ zum Sitz (120) zum Abdecken der Klappvorrichtung (131) in einer ersten Konfiguration geschlossen ist, und die obere Abdeckung (132) relativ zum Sitz (120) zum Freilegen der Klappvorrichtung (131) in einer zweiten Konfiguration offen ist; und
ein erstes Rückstellelement (133), wobei ein Ende des ersten Rückstellelements (133) mit dem Sitz (120) und/oder einem Tragrahmen (110) der Babyaufnahmevorrichtung (100) verbunden ist, und das andere Ende des ersten Rückstellelements (133) mit der oberen Abdeckung (132) so verbunden ist, dass die obere Abdeckung (132) zum Bewegen von der zweiten Konfiguration zur ersten Konfiguration vorgespannt ist.

2. Doppelter Sicherheitsverriegelungsmechanismus (130) nach Anspruch 1, **dadurch gekennzeichnet, dass** eine Öffnung (134) zwischen der oberen Abdeckung (132) und dem Sitz (120) ausgebildet ist, wobei die Öffnung (134) offen ist, wenn sich die obere Abdeckung (132) in der zweiten Konfiguration befindet, und sich die Öffnung (134) schließt, wenn sich die obere Abdeckung (132) von der zweiten Konfiguration zur ersten Konfiguration bewegt.

3. Doppelter Sicherheitsverriegelungsmechanismus (130) nach einem der Ansprüche 1 bis 2, ferner **gekennzeichnet durch** eine Befestigungsstruktur (135), die zwischen der oberen Abdeckung (132) und dem Sitz (120) angeordnet ist und die oberen Abdeckung (132) in der ersten Konfiguration abnehmbar befestigt.

4. Doppelter Sicherheitsverriegelungsmechanismus (130) nach Anspruch 3, **dadurch gekennzeichnet, dass** die Befestigungsstruktur (135) ein Klettverschluss, ein Reißverschluss, eine Schließe, ein Knopf, ein Magnet und/oder ein Riegel ist.

5. Doppelter Sicherheitsverriegelungsmechanismus (130) nach einem der Ansprüche 1 bis 4, **dadurch gekennzeichnet, dass** die Klappvorrichtung (131) umfasst:
einen Klappaktuator (1311), der rittlings auf dem Sitz (120) angeordnet ist und mit dem Klappgelenk zum Ziehen des Klappgelenks verbunden ist; und
ein zweites Rückstellelement (1312), wobei ein Ende des zweiten Rückstellelements (1312) mit dem Tragrahmen (110), dem Sitz (120) und/oder dem Klappaktuator (1311) verbunden ist, wobei das andere Ende des zweiten Rückstellelements (1312) mit dem Klappaktuator (1311) zum Zurückstellen des Klappaktuators (1311) verbunden ist.

6. Doppelter Sicherheitsverriegelungsmechanismus (130) nach Anspruch 5, **dadurch gekennzeichnet, dass** sich das zweite Rückstellelement (1312) dehnt, wenn eine Kraft auf den Klappaktuator (1311) zum Ziehen des Klappgelenks aufgebracht ist und sich das zweite Rückstellelement (1312) zum Zurückstellen des Klappaktuators (1311) zusammenzieht, wenn der Klappaktuator (1311) freigegeben ist.

7. Doppelter Sicherheitsverriegelungsmechanismus (130) nach einem der Ansprüche 5 bis 6, **dadurch gekennzeichnet, dass** das erste Rückstellelement (133) und das zweite Rückstellelement (1312) ein elastisches Band, eine Feder, ein Gummiband und/der ein elastischer Eisendraht ist.

8. Doppelter Sicherheitsverriegelungsmechanismus (130) nach einem der Ansprüche 1 bis 7, ferner **gekennzeichnet durch** eine untere Abdeckung (136), die mit dem Sitz (120) verbunden ist und die Klappvorrichtung (131) abdeckt und zwischen dem Sitz (120) und der oberen Abdeckung (132) angeordnet ist.

9. Doppelter Sicherheitsverriegelungsmechanismus (130) nach Anspruch 8, **dadurch gekennzeichnet, dass** die untere Abdeckung (136) zum Freilegen der Klappvorrichtung (131) relativ zum Sitz (120) umdrehbar ist.

10. Doppelter Sicherheitsverriegelungsmechanismus (130) nach einem der Ansprüche 8 bis 9, **dadurch gekennzeichnet, dass** die untere Abdeckung (136) aus elastischem Material hergestellt ist.

11. Doppelter Sicherheitsverriegelungsmechanismus (130) nach einem der Ansprüche 8 bis 10, ferner **gekennzeichnet durch** ein drittes Rückstellelement, das mit der unteren Abdeckung (136) und dem Sitz (120) verbunden ist.

12. Doppelter Sicherheitsverriegelungsmechanismus (130) nach Anspruch 11, **dadurch gekennzeichnet, dass** das dritte Rückstellelement ein elastisches Band, eine Feder, ein Gummiband und/oder ein elastischer Eisendraht ist.

13. Doppelter Sicherheitsverriegelungsmechanismus (130) nach einem der Ansprüche 1 bis 12, **dadurch gekennzeichnet, dass** die obere Abdeckung (132) aus starrem Material oder flexiblem Material hergestellt ist.

14. Babyaufnahmevorrichtung (100), umfassend:
einen Tragrahmen (110);
einen Sitz (120), der am Tragrahmen (110) montiert ist; und
einen doppelten Sicherheitsverriegelungsmechanismus (130) nach einem der Ansprüche 1 bis 12.

## Revendications

1. Mécanisme à double verrou de sûreté (130) utilisé dans un porte-bébé (100), le mécanisme à double verrou de sûreté (130) comprenant :
un dispositif de pliage (131) relié à une articulation de pliage du porte-bébé (100) et permettant d'amener l'articulation de pliage à plier le porte-bébé (100) ;
un couvercle supérieur (132) disposé sur un siège (120) du porte-bébé (100) et permettant de recouvrir le dispositif de pliage (131), le couvercle supérieur (132) étant fermé par rapport au siège (120) pour recouvrir le dispositif de pliage (131) dans une première configuration, et le couvercle supérieur (132) étant ouvert par rapport au siège (120) pour exposer le dispositif de pliage (131) dans une deuxième configuration ; et
un premier élément de rappel (133), une extrémité du premier élément de rappel (133) étant reliée au siège (120) et/ou à un cadre porteur (110) du porte-bébé (100), et une autre extrémité du premier élément de rappel (133) étant reliée au couvercle supérieur (132) de manière à solliciter le couvercle supérieur (132) pour le faire passer de la deuxième configuration à la première configuration.

2. Mécanisme à double verrou de sûreté (130) de la revendication 1, **caractérisé en ce qu'**une ouverture (134) est formée entre le couvercle supérieur (132) et le siège (120), l'ouverture (134) est ouverte lorsque le couvercle supérieur (132) est dans la deuxième configuration, et l'ouverture (134) est fermée lorsque le couvercle supérieur (132) passe de la deuxième configuration à la première configuration.

3. Mécanisme à double verrou de sûreté (130) de l'une quelconque des revendications 1 et 2, **caractérisé en outre par** une structure de fixation (135) disposée entre le couvercle supérieur (132) et le siège (120) et permettant de fixer de manière amovible le couvercle supérieur (132) dans la première configuration.

4. Mécanisme à double verrou de sûreté (130) de la revendication 3, **caractérisé en ce que** la structure de fixation (135) est au moins l'un(e) d'une fermeture auto-agrippante, d'une fermeture à glissière, d'une fixation, d'un bouton, d'un aimant et d'une latte.

5. Mécanisme à double verrou de sûreté (130) de l'une quelconque des revendications 1 à 4, **caractérisé en ce que** le dispositif de pliage (131) comprend :
un actionneur de pliage (1311) disposé à cheval sur le siège (120) et relié à l'articulation de pliage pour tirer l'articulation de pliage ; et
un deuxième élément de rappel (1312), une extrémité du deuxième élément de rappel (1312) étant reliée à au moins l'un du cadre porteur (110), du siège (120) et de l'actionneur de pliage (1311), une autre extrémité du deuxième élément de rappel (1312) étant reliée à l'actionneur de pliage (1311) pour ramener l'actionneur de pliage (1311).

6. Mécanisme à double verrou de sûreté (130) de la revendication 5, **caractérisé en ce que** le deuxième élément de rappel (1312) est étiré lorsque l'actionneur de pliage (1311) est forcé de tirer l'articulation de pliage, et le deuxième élément de rappel (1312) se rétracte pour ramener l'actionneur de pliage (1311) lorsque l'actionneur de pliage (1311) est relâché.

7. Mécanisme à double verrou de sûreté (130) de l'une quelconque des revendications 5 et 6, **caractérisé en ce que** chacun du premier élément de rappel (133) et du deuxième élément de rappel (1312) est au moins l'un(e) d'un ruban élastique, d'un ressort, d'une bande de caoutchouc et d'un fil de fer élastique.

8. Mécanisme à double verrou de sûreté (130) de l'une quelconque des revendications 1 à 7, **caractérisé en outre par** un couvercle inférieur (136) relié au siège (120) et permettant de recouvrir le dispositif de pliage (131) et disposé entre le siège (120) et le couvercle supérieur (132).

9. Mécanisme à double verrou de sûreté (130) de la revendication 8, **caractérisé en ce que** le couvercle inférieur (136) est susceptible d'être inversé par rapport au siège (120) de manière à exposer le dispositif de pliage (131).

10. Mécanisme à double verrou de sûreté (130) de l'une quelconque des revendications 8 et 9, **caractérisé en ce que** le couvercle inférieur (136) est constitué d'un matériau élastique.

11. Mécanisme à double verrou de sûreté (130) de l'une quelconque des revendications 8 à 10, **caractérisé en outre par** un troisième élément de rappel relié au couvercle inférieur (136) et au siège (120).

12. Mécanisme à double verrou de sûreté (130) de la revendication 11, **caractérisé en ce que** le troisième élément de rappel est au moins l'un(e) d'un ruban élastique, d'un ressort, d'une bande de caoutchouc et d'un fil de fer élastique.

13. Mécanisme à double verrou de sûreté (130) de l'une quelconque des revendications 1 à 12, **caractérisé en ce que** le couvercle supérieur (132) est constitué d'un matériau rigide ou d'un matériau souple.

14. Porte-bébé (100), comprenant :
un cadre porteur (110) ;
un siège (120) monté sur le cadre porteur (110) ; et
le mécanisme à double verrou de sûreté (130) de l'une quelconque des revendications 1 à 12.
